# EUROPEAN PATENT APPLICATION

(11) **EP 4 852 357 A1**
(43) Date of publication of application: **09.12.2026**
(21) Application number: 25760848.9
(22) Date of filing: 21.02.2025
(51) Int. Cl.: H04L 1/08, H04W 72/12

(54) **COMMUNICATION METHOD AND APPARATUS**

(30) Priority: 27.02.2024 CN 202410219668
(71) Applicant: HUAWEI TECHNOLOGIES CO., LTD., Shenzhen, Guangdong 518129 (CN)
(72) Inventor: LI, Chenwan, Shenzhen, Guangdong 518129 (CN); WU, Yiling, Shenzhen, Guangdong 518129 (CN); SHI, Yulong, Shenzhen, Guangdong 518129 (CN)
(74) Representative: Huawei European IPR
(86) International application number: PCT/CN2025/078504
(87) International publication number: WO 2025/180306

(57) **Abstract**

This application provides a communication method and apparatus, to implement data retransmission of AIoT terminals. The method includes: A terminal device receives first information, where the first information indicates to send data of the AIoT terminal. The terminal device sends first data based on the first information, where the first data is data of the ambient internet of things AIoT terminal. The terminal device receives second information, where the second information indicates to send data of the AIoT terminal. The terminal device sends the first data based on the second information.

## Description

### CROSS-REFERENCE TO RELATED APPLICATIONS

This application claims priority to Chinese Patent Application No. 202410219668.9, filed with the China National Intellectual Property Administration on February 27, 2024 and entitled "COMMUNICATION METHOD AND APPARATUS", which is incorporated herein by reference in its entirety.

### TECHNICAL FIELD

This application relates to the field of mobile communication technologies, and in particular, to a communication method and apparatus.

### BACKGROUND

With the increasingly wide application of 5th generation (5th generation, 5G) mobile communication such as new radio (new radio, NR) communication, machine-type communication (machine-type communication, MTC) and internet of things (internet of things, IoT) communication, a quantity of connected IoT devices rises day by day. Therefore, the industry has an increasingly strong requirement for reducing costs and power consumption of IoT devices. In the era of 4th generation (4th generation, 4G) mobile communication, 3GPP introduces a narrow-band IoT (narrow-band IoT, NB-IoT) system, to reduce costs and power consumption of IoT devices. However, the NB-IoT terminals still rely on complete external power supply, for example, power supplied by batteries or external power sources. In addition, the NB-IoT terminals can generate local high-frequency local-oscillator carriers. Therefore, such terminals can only have milliwatt-level power consumption, which needs to be further reduced. The radio frequency identification (radio frequency identification, RFID) technology offers a good technical reference in the direction of low power consumption, which can support microwatt-level power consumption, leading to a better application prospect.

In view of the advantage of the RFID communication technology in low power consumption, 5G ambient IoT (ambient IoT, AIoT) emerges. Currently, how to implement data retransmission of AIoT terminals becomes an urgent technical problem to be resolved.

### SUMMARY

This application provides a communication method and apparatus, to implement data retransmission of AIoT terminals.

According to a first aspect, a communication method is provided. The method may be implemented by a first communication apparatus. The first communication apparatus may be a terminal device, or may be a component in the terminal device, for example, referred to as a terminal apparatus. The component in this application may include, for example, at least one of a chip, a chip system, a processor, a transceiver, a processing unit, or a transceiver unit. The terminal device may be an AIoT terminal. For example, the method is performed by the terminal. The method may be implemented through the following steps: The terminal device receives first information, where the first information indicates to send data of the AIoT terminal. The terminal device sends first data based on the first information, where the first data is data of the ambient internet of things AIoT terminal. The terminal device receives second information, where the second information indicates to send data of the AIoT terminal. The terminal device sends the first data or identification information of the AIoT terminal based on the second information.

Based on the first aspect, the AIoT terminal may send the first data based on the first information, and retransmit the first data based on the second information, to implement data retransmission of the AIoT terminal.

In a possible implementation, that the second information indicates to send the data of the AIoT terminal includes: the second information indicates to repeatedly send the data of the AIoT terminal; or the second information indicates that the data of the AIoT terminal fails to be received.

In a possible implementation, the second information is the same as the first information. Based on this implementation, the second information and the first information may be carried content. In other words, the second information and the first information may be same information, same signaling, or a same message.

In a possible implementation, the second information includes any one of a contention resolution message, an acknowledgment indication (ACK), an AIoT downlink command, or a random access response. The random access response may also be replaced with a message 2 including a random access response. The acknowledgment indication may also be referred to as an access acknowledgment message, an access acknowledgment indication, or the like. This is not specifically limited. The contention resolution message or the acknowledgment indication may also be replaced with other information, signaling, or messages indicating an access success.

The random access response, the message 2, or the contention resolution message may include a random number and/or a temporary identifier of the AIoT terminal. The random number may be used by the AIoT terminal to initiate access. The temporary identifier is an identifier used between the AIoT terminal and an access network device to identify the AIoT terminal. Based on this implementation, the random number and/or the temporary identifier may be indicated to the AIoT terminal by using the second information without an additional message, thereby reducing signaling overheads.

In a possible implementation, the second information includes the contention resolution message or the ACK, and the AIoT terminal may send the identification information of the AIoT terminal based on the second information. Based on this implementation, retransmission of the identification information of the AIoT terminal may be triggered by using the contention resolution message or the ACK. The identification information of the AIoT terminal is, for example, an electronic product code (electronic product code, EPC) of the AIoT terminal.

In a possible implementation, both the first information and the second information include contention resolution messages, or both the first information and the second information include ACKs, and the method further includes: determining, based on the contention resolution message or the ACK included in the first information, that random access of the AIoT terminal is successful. Based on this implementation, both the first information and the second information may include contention resolution messages or ACKs. The AIoT terminal may determine, based on the first information, that random access of the AIoT terminal is successful, and does not need to determine, based on the second information, that random access of the AIoT terminal is successful, thereby avoiding a repeated operation performed based on the second information.

In a possible implementation, the AIoT downlink command includes a read command, and the first data includes a read response. Based on this implementation, retransmission of the read response may be triggered by using the read command.

In a possible implementation, the AIoT downlink command includes a write command, and the first data includes a write response. Based on this implementation, retransmission of the write response may be triggered by using the write command.

In a possible implementation, the second information is carried in a downlink data packet. Based on this implementation, the second information may be carried in the downlink data packet, to improve retransmission efficiency. For example, the second information is carried in a header of the downlink data packet.

In a possible implementation, the sending the first data based on the first information includes: sending at least one segment of the first data based on the first information; and after the receiving the second information, the method further includes: clearing a buffered segment of the first data. The terminal device may send the first data in segments, and the terminal device may buffer all the segments of the first data, and send different segments on different resources. The second information may indicate whether one or more segments of the first data are successfully received. If the terminal device receives the second information after sending one or more segments, the terminal device may clear a buffer, and retransmit all the segments of the first data. Therefore, the AIoT terminal does not need to perform retransmission after completing sending of all the segments of the first data. This can improve transmission efficiency, and reduce buffer occupation of the AIoT terminal.

In a possible implementation, the second information includes a radio link control (radio link control, RLC) layer status report, and the RLC layer status report indicates that the first data fails to be received. In other words, the RLC layer status report may indicate that one or more RLC layer data packets corresponding to the first data are not successfully received.

In a possible implementation, the RLC layer status report includes one or more of the following:
first indication information indicating whether a first RLC layer data packet is successfully received, where the first RLC layer data packet corresponds to the first data; and
second indication information indicating whether a plurality of RLC layer data packets are successfully received, where the plurality of RLC layer data packets correspond to the first data.

Based on this implementation, the first data may correspond to one or more RLC layer data packets, that is, one or more RLC layer data packets may be generated based on the first data. The first indication information may indicate whether one of the one or more RLC layer data packets corresponding to the first data is successfully received, and the second indication information may indicate whether a plurality of RLC layer data packets in the one or more RLC layer data packets corresponding to the first data are successfully received. Therefore, uplink retransmission can be indicated flexibly.

In a possible implementation, the method further includes: sending a poll field used to trigger the RLC layer status report. Therefore, the AIoT terminal may trigger the RLC layer status report by using the poll field. In other words, the base station does not need to send the RLC status report when the poll field is not received. Optionally, the poll field may be used to trigger the first indication information or the second indication information. For example, information or a field used to trigger the first indication information or the second indication information may be carried.

In a possible implementation, information about the first data is received, where the information about the first data includes at least one of location information of the first data, type information of the first data, or an index of the first data. Based on this implementation, data that needs to be retransmitted may be indicated by using the information about the first data. For example, the information about the first data may be carried in a paging message for the AIoT terminal. The paging message may be transmitted before the first information. For another example, the information about the first data and the first information may be carried in a same message, same signaling, or a same field, or the information about the first data may be carried in the second information. For another example, the information about the first data and the second information may be carried in a same message, same signaling, or a same field, or the information about the first data may be carried in the second information.

In a possible implementation, the method further includes: receiving third information, where the third information indicates that the AIoT terminal is in an unsuccessful transmission state. Based on this implementation, the base station may indicate, by using the third information, that a transmission state of the AIoT terminal is the unsuccessful transmission state. The AIoT terminal in this state has data that is unsuccessfully transmitted. In this application, that the AIoT terminal is in the unsuccessful transmission state may also be understood as that the AIoT terminal belongs to an unsuccessful transmission group.

In a possible implementation, the third information is query repeat (QueryRep) signaling, or referred to as a QueryRep message. The QueryRep message in this application may be replaced with a (next) access occasion trigger ((next) access occasion trigger/indication) message, or other signaling or messages used to trigger an access occasion.

In a possible implementation, the method further includes: receiving fourth information, where the fourth information is used to trigger the terminal in the unsuccessful transmission state to perform random access; and performing random access based on the fourth information. The fourth information is, for example, a paging message, a query (Query) message, an access round trigger (access round trigger) message, an access round indication (access round indication), or other signaling or messages used to trigger user access. It may also be understood as that the query message in this application may be replaced with an access round trigger message, an access round indication message, or other signaling or messages used to trigger user access.

Based on this implementation, one or more terminals in the unsuccessful transmission state may be triggered by using the fourth information to perform random access, so that the one or more terminals in the unsuccessful transmission state perform data transmission, for example, data retransmission, after successful random access. For example, the fourth information may be a paging message or a query message, the paging message or the query message may carry indication information, and the indication information indicates, for example, the unsuccessful transmission state. It may also be understood as that the fourth information is the indication information in a paging message or a query message.

According to a second aspect, a communication method is provided. The method may be implemented by a second communication apparatus. In this application, the second communication apparatus may be an access network apparatus. The access network apparatus may be an access network device or a component in the access network device. The component in this application may include, for example, at least one of a chip, a chip system, a processor, a transceiver, a processing unit, or a transceiver unit. The access network device is, for example, a base station. The access network apparatus may also be referred to as a network apparatus, and the access network device may also be referred to as a network device. For example, the method is performed by the access network device. The method may be implemented through the following steps: The access network device sends first information, where the first information is used to request first data, and the first data is data of an AIoT terminal. The access network device sends second information upon determining that the data of the AIoT terminal is not received, where the second information indicates to send data of the AIoT terminal. The access network device may further receive or listen to the first data of the AIoT terminal.

In a possible implementation, the determining that the first data is not received includes: determining that the data of the AIoT terminal is not received within a time period after the first information is sent. Based on this implementation, the access network device may determine, based on the time period, whether the first data is received after the first information is sent.

In a possible implementation, if the first information includes a read command, the time period is a first time period; or if the first information includes a write command, the time period is a second time period, where a length of the second time period is greater than a length of the first time period.

Based on this implementation, different commands may correspond to different time periods. The time period corresponding to the write command may be greater than the time period corresponding to the read command, because the AIoT terminal takes a longer time to respond to the write command. After responding to the write command, the AIoT terminal may send the first data in response to the write command. Optionally, both the first information and the second information may be write commands or read commands.

In a possible implementation, the method further includes: receiving type information of the first information, where the type information indicates that the first information is a write command. Therefore, the base station may learn that an AIoT downlink command is a write command, and correspondingly, may determine, based on a time period corresponding to the write command, whether uplink data is received within a corresponding time period. Different types of first information or AIoT downlink commands may correspond to different time periods.

In a possible implementation, the method further includes: receiving indication information of the time period. Based on this implementation, the access network device may receive the indication information or a configuration of the time period. For example, the access network device may receive the indication information of the time period from a core network element.

In a possible implementation, the method further includes: receiving fifth information from the core network element, where the first information is determined based on the fifth information; and determining the second information based on the first information or the fifth information. Based on this implementation, the access network device may determine the first information based on the fifth information from the core network element, and when the second information needs to be sent, the access network device may also determine the second information based on the fifth information, or may send the second information based on the first information. For example, the first information is the same as the fifth information, and/or the second information is the same as the fifth information. Therefore, the access network device does not need to reobtain, from the core network element, information used to generate the second information, thereby reducing core network signaling overheads.

In a possible implementation, that the second information indicates to send the data of the AIoT terminal includes: the second information indicates to repeatedly send the data of the AIoT terminal; or the second information indicates that the data of the AIoT terminal fails to be received.

In a possible implementation, the second information is the same as the first information.

In a possible implementation, the second information includes any one of a contention resolution message, an acknowledgment ACK indication, an AIoT downlink command, or a random access response. The random access response, a message 2 including the random access response, or the contention resolution message may include a random number and/or a temporary identifier of the AIoT terminal. The temporary identifier is an identifier used between the AIoT terminal and the access network device to identify the AIoT terminal.

In a possible implementation, the second information includes the contention resolution message or the ACK, and the AIoT terminal may send identification information of the AIoT terminal based on the second information. Therefore, the access network device may receive the identification information of the AIoT terminal.

In a possible implementation, the AIoT downlink command includes a read command, and the first data includes a read response.

In a possible implementation, the AIoT downlink command includes a write command, and the first data includes a write response.

In a possible implementation, the second information is carried in a downlink data packet.

In a possible implementation, the second information includes an RLC layer status report, and the RLC layer status report indicates that the first data fails to be received.

In a possible implementation, the RLC layer status report includes one or more of the following: first indication information indicating whether a first RLC layer data packet is successfully received, where the first RLC layer data packet corresponds to the first data; and second indication information indicating whether a plurality of RLC layer data packets are successfully received, where the plurality of RLC layer data packets correspond to the first data.

In a possible implementation, the method further includes: receiving a poll field used to trigger the RLC layer status report.

In a possible implementation, the method further includes: sending information about the first data, where the information about the first data includes at least one of location information of the first data, type information of the first data, or an index of the first data.

In a possible implementation, the information about the first data is carried in a paging message for the AIoT terminal.

In a possible implementation, the method further includes: sending third information, where the third information indicates that the AIoT terminal is in an unsuccessful transmission state.

In a possible implementation, the third information is QueryRep signaling.

In a possible implementation, the method further includes: sending fourth information, where the fourth information is used to trigger the terminal in the unsuccessful transmission state to perform random access; and performing random access based on the fourth information.

For beneficial effects of the second aspect and the possible implementations of the second aspect, refer to the descriptions of the beneficial effects of the first aspect and the corresponding implementations of the first aspect. Details are not described herein again.

According to a third aspect, a communication apparatus is provided. The apparatus can implement the method according to any one of the first aspect and the second aspect and the possible implementations of the first aspect and the second aspect. The apparatus has a function of the first communication apparatus or the second communication apparatus. The apparatus is, for example, a terminal device, a functional module in the terminal device, a network device, or a functional module in the network device.

In an optional implementation, the apparatus may include a one-to-one corresponding module for performing the method/operation/step/action according to any one of the first aspect and the second aspect and the possible implementations of the first aspect and the second aspect. The module may be implemented by a hardware circuit, software, or a combination of a hardware circuit and software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as the transceiver unit, and the functional module can implement the sending function and the receiving function. Alternatively, the sending unit and the receiving unit may be different functional modules, and the transceiver unit is a collective term for these functional modules.

For example, when the apparatus is configured to perform the method described in the first aspect or the second aspect, the apparatus may include the communication unit and the processing unit.

According to a fourth aspect, an embodiment of this application further provides a communication apparatus, including a processor, configured to execute a computer program (or computer-executable instructions) stored in a memory. When the computer program (or the computer-executable instructions) is executed, the apparatus is caused to perform the method according to any one of the first aspect and the second aspect and the possible implementations of the first aspect and the second aspect.

In a possible implementation, the processor and the memory are integrated together.

In another possible implementation, the memory is located outside the communication apparatus.

The communication apparatus further includes a communication interface, and the communication interface is used by the communication apparatus to communicate with another device, for example, send or receive data and/or signals. For example, the communication interface may be a transceiver, a circuit, a bus, a module, or other types of communication interfaces.

According to a fifth aspect, a computer-readable storage medium is provided. The computer-readable storage medium is configured to store a computer program or instructions. When the computer program or the instructions are run, the method according to any one of the first aspect and the second aspect and the possible implementations of the first aspect and the second aspect is implemented.

According to a sixth aspect, a computer program product including instructions is provided. When the computer program product runs on a computer, the method according to any one of the first aspect and the second aspect and the possible implementations of the first aspect and the second aspect is implemented.

According to a seventh aspect, an embodiment of this application further provides a communication apparatus, configured to perform the method according to any one of the first aspect and the second aspect and the possible implementations of the first aspect and the second aspect.

According to an eighth aspect, a chip system is provided. The chip system includes a circuit (or it is understood as that the chip system includes a processor, and the processor may include a circuit or the like), and may further include an input/output interface. The input/output interface may be configured to input messages and output messages. The input/output interface may be a same interface, that is, the same interface can implement both a sending function and a receiving function. Alternatively, the input/output interface includes an input interface and an output interface; the input interface is configured to implement a receiving function, that is, receive messages; and the output interface is configured to implement a sending function, that is, send messages. The circuit may include a logic circuit and/or an analog circuit. The circuit may be configured to perform operations other than the receiving and sending functions in the method according to any one of the first aspect and the second aspect and the possible implementations of the first aspect and the second aspect. The circuit may be further configured to transmit messages to the input/output interface, or receive, from the input/output interface, messages from other communication apparatuses. The chip system may be configured to implement the method according to any one of the first aspect and the second aspect and the possible implementations of the first aspect and the second aspect. The chip system may include a chip, or may include a chip and another discrete component.

Optionally, the chip system may further include a memory or a circuit, the memory may be configured to store instructions, and the memory or the circuit may invoke the instructions stored in the memory to implement corresponding functions.

According to a ninth aspect, a communication method is provided. The communication method may include the method implemented by the first communication apparatus according to any one of the first aspect and the possible implementations of the first aspect, and the method implemented by the second communication apparatus according to any one of the second aspect and the possible implementations of the second aspect.

According to a tenth aspect, a communication system is provided. The communication system may include a first communication apparatus and a second communication apparatus. The first communication apparatus may be configured to implement the method according to any one of the first aspect and the possible implementations of the first aspect, and the second communication apparatus may be configured to implement the method according to any one of the second aspect and the possible implementations of the second aspect.

For technical effects brought by the third aspect to the tenth aspect, refer to the descriptions of the beneficial effects of the corresponding solutions in the first aspect and the second aspect. Details are not described herein again.

### BRIEF DESCRIPTION OF DRAWINGS

FIG. 1 is a diagram of an architecture of a wireless communication system;
FIG. 2 is a diagram of a communication procedure between an AIoT terminal and a reader;
FIG. 3 is a flowchart of a communication method according to an embodiment of this application;
FIG. 4 is a flowchart of another communication method according to an embodiment of this application;
FIG. 5 is a diagram of a structure of another communication apparatus according to an embodiment of this application; and
FIG. 6 is a diagram of a structure of another communication apparatus according to an embodiment of this application.

### DESCRIPTION OF EMBODIMENTS

Embodiments of this application provide a communication method and apparatus. The method and the apparatus are based on a same inventive concept. Because problem-resolving principles of the method and the apparatus are similar, mutual reference may be made between implementation of the apparatus and implementation of the method, and details are not repeated.

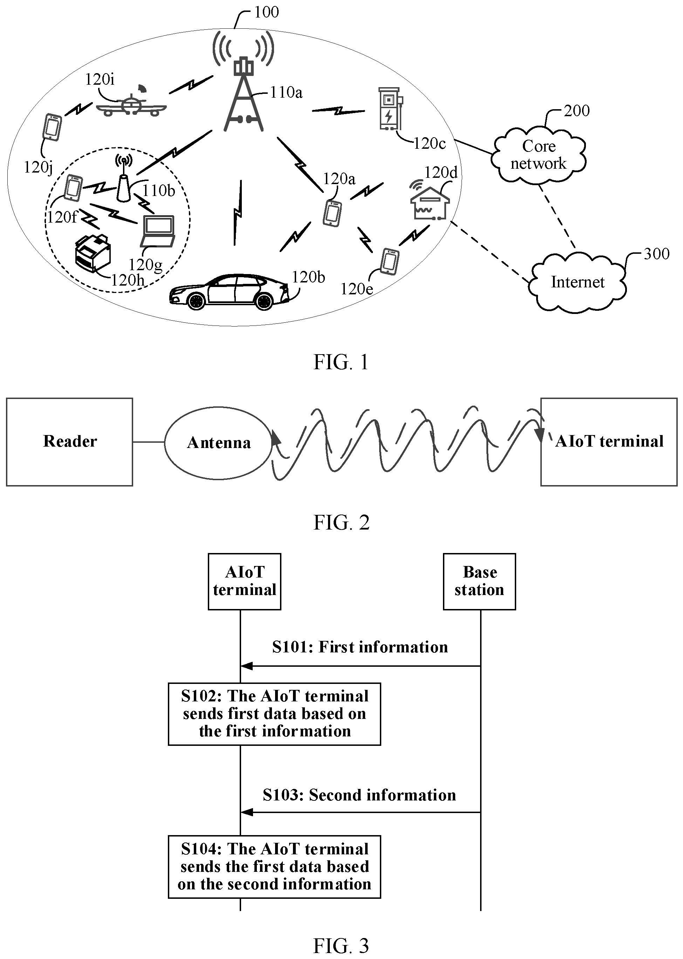

FIG. 1 is a diagram of an architecture of a communication system to which embodiments of this application are applied. As shown in FIG. 1, the communication system includes an access network 100 and a core network 200. Optionally, the communication system may further include the internet 300. The radio access network (radio access network, RAN) 100 may include at least one RAN node (for example, 110a and 110b in FIG. 1), and may further include at least one terminal (for example, 120a to 120j in FIG. 1). The terminal is connected to the radio access network device (or referred to as an access network device for short) in a wireless manner, and the radio access network device is connected to the core network in a wireless or wired manner. A core network device and a radio access network device may be different physical devices independent of each other, or functions of the core network device and logical functions of the radio access network device may be integrated into a same physical device, or a part of functions of the core network device and a part of functions of the radio access network device may be integrated into one physical device. Terminals may be connected to each other in a wired or wireless manner, as well as radio access network devices. FIG. 1 is merely a diagram. It may be understood that, in addition to the access network device, the communication system may further include other network devices, such as a wireless relay device and a wireless backhaul device, which are not shown in FIG. 1.

In this application, the network device is a network side device having a transceiver function. For example, the network device may be an apparatus in the RAN that provides a wired and/or wireless communication function for the terminal device, referred to as a RAN device. The RAN may be an access network in the 3rd generation partnership project (3rd generation partnership project, 3GPP), for example, a 4G, 5G, or future-oriented 6th generation (6th generation, 6G) mobile communication network. Alternatively, the RAN may be an open access network (open RAN, O-RAN, or ORAN), a cloud radio access network (cloud radio access network, CRAN), or a communication network including two or more of the foregoing networks. The RAN device may be a base station (base station), an evolved NodeB (evolved NodeB, eNodeB), or a transmission reception point (transmission reception point, TRP) in a long term evolution (long term evolution, LTE) or long term evolution advanced (LTE advanced, LTE-A) communication system, a next generation NodeB (next generation nodeB, gNB) in a 5th generation (5th generation, 5G) mobile communication system, a next generation base station in a 6th generation (6th generation, 6G) mobile communication system, a base station in a future mobile communication system, or an access node in a wireless fidelity (wireless fidelity, Wi-Fi) system, a long distance radio (long range radio, LoRa) system, or an internet of vehicles system. Alternatively, the RAN device may be a module or unit that completes a part of functions of a base station, for example, a central unit (central unit, CU), a distributed unit (distributed unit, DU), or a radio unit (radio unit, RU). Herein, the CU completes functions of a radio resource control protocol and a packet data convergence protocol (packet data convergence protocol, PDCP) of the base station, and may further complete a function of a service data adaptation protocol (service data adaptation protocol, SDAP); and the DU completes functions of a radio link control layer and a medium access control (medium access control, MAC) layer of the base station, and may further complete a part of or all functions of a physical layer. For specific descriptions of the protocol layers, refer to related technical specifications of the 3rd generation partnership project (3rd generation partnership project, 3GPP). The CU and the DU may be separately disposed, or may be included in a same network element, for example, a baseband unit (baseband unit, BBU). The RU may be included in a radio frequency device or a radio frequency unit, for example, a remote radio unit (remote radio unit, RRU), an active antenna unit (active antenna unit, AAU), or a remote radio head (remote radio head, RRH). In different systems, the CU, the DU, or the RU may have different names, but a person skilled in the art may understand meanings thereof. For example, in an ORAN system, the CU may also be referred to as an O-CU (open CU), the DU may also be referred to as an O-DU, and the RU may also be referred to as an O-RU. Any one of the CU (or the CU-CP or the CU-UP), the DU, and the RU in this application may be implemented by using a software module, a hardware module, or a combination of a software module and a hardware module. The radio access network device may be a macro base station (for example, 110a in FIG. 1), or may be a micro base station or an indoor station (for example, 110b in FIG. 1), or may be a relay node, a donor node, or the like. A specific technology and a specific device form that are used for the radio access network device are not limited in embodiments of this application. For ease of description, the network device may be short for the radio access network device, and the base station may be used as an example of the radio access network device.

It may be understood that the access network device may be a device including one or more of a CU, a DU, or an AAU. In addition, the CU may be classified as a network device in the access network, or the CU may be classified as a network device in the core network (core network, CN). This is not limited in this application.

The terminal is a device having a wireless transceiver function, which can send signals to the base station, or receive signals from the base station. The terminal may also be referred to as a terminal device, user equipment (user equipment, UE), a mobile station, a mobile terminal, or the like. The terminal can be widely used in various scenarios, for example, device-to-device (device-to-device, D2D) communication, vehicle-to-everything (vehicle-to-everything, V2X) communication, machine-type communication (machine-type communication, MTC), internet of things (internet of things, IoT), virtual reality, augmented reality, industrial control, autonomous driving, telemedicine, smart grid, smart furniture, smart office, smart wearable, smart transportation, smart city, and smart home. The terminal may be a mobile phone, a tablet computer, a computer having a wireless transceiver function, a wearable device, a vehicle, an airplane, a ship, a robot, a robotic arm, a smart household device, or the like. A specific technology and a specific device form that are used for the terminal are not limited in embodiments of this application.

It may be understood that the terminal in this application may be a device having a backscatter (backscatter) transmission-based function, for example, an AIoT terminal. The AIoT terminal may also be referred to as a tag, an AIoT tag, a terminal in an AIoT scenario, or a tag in an AIoT scenario. The AIoT terminal may be a terminal device that supports an RFID technology.

AIoT terminals may be classified into types based on whether a backscatter (backscatter)-based communication manner is used. For example, AIoT terminals may be classified into three types: an active terminal, a passive terminal, and a semi-active terminal. Tags may be classified into the following types: an active tag (active tag), a passive tag (passive tag), and a semi-passive tag (semi-passive tag). The passive tag and the semi-passive tag use the backscatter-based communication manner, and the active tag uses a technology of actively generating a carrier, that is, non- backscatter-based communication. The AIoT terminal may also be referred to as an AIoT device, that is, the terminal may also be referred to as a device for ease of distinguishing from a 5G terminal.

In addition, the AIoT terminals may alternatively be classified based on whether they have an energy storage capability or not, or based on a combination of the two classification manners. For example, the AIoT terminal in this application may also be referred to as an AIoT device. The AIoT device may be a device A, a device B, or a device C. The device A is a device that does not store energy or independently generate signals, for example, may be a backscatter transmission device that specifically has this feature. The device B may be a device that stores energy but does not independently generate signals, for example, may be a backscatter transmission device that specifically has this feature, where a manner of using the stored energy may include amplifying a backscattered signal. The device C may be a device that stores energy and independently generates signals, for example, an active radio frequency (radio frequency, RF) component for transmission.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenario such as a smart grid, industrial control, smart transportation, or a smart city. A function of the terminal may alternatively be performed by a module (for example, a chip or a modem) in the terminal, or may be performed by an apparatus including the function of the terminal.

In this application, the base station sends downlink (downlink, DL) signals or downlink information to the terminal, where the downlink information is carried on a downlink channel; and the terminal sends uplink (uplink, UL) signals or uplink information to the base station, where the uplink information is carried on an uplink channel.

It may be understood that roles of the base station and the terminal in this application may be relative. For example, a helicopter or uncrewed aerial vehicle 120i in FIG. 1 may be configured as a mobile base station. For those terminals 120j accessing the radio access network 100 through 120i, the terminal 120i is a base station, while for the base station 110a, 120i is a terminal, that is, communication between 110a and 120i is performed based on a wireless air interface protocol. Certainly, the communication between 110a and 120i may alternatively be performed based on an interface protocol between base stations. In this case, for 110a, 120i is also a base station. Therefore, both the base station and the terminal may be referred to as communication apparatuses, 110a and 110b in FIG. 1 may be referred to as communication apparatuses having base station functions, and 120a to 120j in FIG. 1 may be referred to as communication apparatuses having terminal functions.

In this application, an example in which the base station is used as the access network device is used for description subsequently. The base station and the terminal may be fixed or movable. The base station and the terminal may be deployed on land, including an indoor or outdoor device, a handheld device, or a vehicle-mounted device, or may be deployed on water, or may be deployed on an airplane, a balloon, or an artificial satellite. Application scenarios of the base station and the terminal are not limited in embodiments of this application.

In this application, the network device may further include a CN device. The core network element may include a mobility management network element, mainly used for mobility management, access management, and the like. In a 5G communication system, the access management network element may be an access and mobility management function (access and mobility management function, AMF), mainly performing functionalities such as mobility management and access authentication or authorization.

In a future communication system, for example, a 6G communication system, the mobility management network element may still use the name of the mobility management network element in the 5G communication system, or may have other names. This is not limited in embodiments of this application. Functions of the network element or device may be implemented by one independent network element, or may be jointly implemented by several network elements. During actual deployment, network elements in the core network may be deployed on a same physical device or different physical devices.

It may be understood that the mobility management network element may be a network element in a hardware device, or may be a software function running on dedicated hardware, or may be a virtualization function instantiated on a platform (for example, a cloud platform). Optionally, the network element or function may be implemented by one device, or may be jointly implemented by a plurality of devices, or may be a functional module in one device. This is not specifically limited in embodiments of this application.

In this application, an example in which the AMF is used as the mobility management network element or the core network element is used for description subsequently.

With the increasingly wide application of 5G NR communication, the MTC technology, and IoT communication, a quantity of connected IoT devices rises day by day. Therefore, the industry has an increasingly strong requirement for reducing costs and power consumption of IoT devices. In the era of 4G, 3GPP introduces an NB-IoT system, to reduce costs and power consumption of IoT devices. However, the NB-IoT terminals still rely on complete external power supply, for example, power supplied by batteries or external power sources. In addition, the NB-IoT terminals can generate local high-frequency local-oscillator carriers. Therefore, such terminals can only have milliwatt-level power consumption, which needs to be further reduced. The RFID technology offers a good technical reference in the direction of low power consumption, which can support microwatt-level power consumption, leading to a better application prospect. In this application, an AIoT terminal may receive a downlink signal by using a low-precision, low-power-consuming, and medium-low-frequency ring oscillator or completely without a local oscillator. For example, when the AIoT terminal works, communication energy and carriers are supplied by a reader (reader), and communication is based on backscattered carriers. The reader may be a handheld or fixed device that reads information from the AIoT terminal. Optionally, the reader may be further configured to write information into the AIoT terminal. A form of the reader is not limited in this application, which may be a base station, a terminal, a relay node, or an integrated access and backhaul (integrated access and backhaul, IAB) node. For example, when the reader is a terminal, communication between the reader and the AIoT terminal may be considered as transmission between terminals. For another example, when the reader is a base station, communication between the reader and the AIoT terminal is universal user to network interface (universal user to network interface, Uu) communication, that is, air interface communication is performed between the reader and the AIoT terminal. The AIoT terminal may be located in a coverage area provided by the reader.

As shown in FIG. 2, the reader sends, through an antenna, a carrier shown by a solid line, and the AIoT terminal performs modulation based on the carrier sent by the reader and backscatters a signal shown by dashed lines to transmit information. A process in which the reader triggers a plurality of AIoT terminals to complete reporting is referred to as an inventory process. The AIoT terminal may determine, based on an inventory flag, whether to access the reader. The inventory flag may be implemented by software or a hardware capacitor. For example, the inventory flag may be a flag including two states, and the two states are A and B, or 0 and 1. This is not specifically limited. Any AIoT terminal may include at least one inventory flag, and the AIoT terminal may determine, based on the inventory flag, whether to respond to the reader. For example, the reader may select an inventory flag whose inventory flag is A or B to access a network. In addition, optionally, this application may also be applied to a communication scenario including both a reader and a helper (helper), where an AIoT terminal is connected to the reader (for example, a base station) only in an uplink (or a downlink), and the AIoT terminal is connected to the helper (for example, another terminal) only in a downlink (or an uplink), that is, the AIoT terminal transmits uplink data and downlink data respectively via the reader and the helper.

Currently, the AIoT terminal sends uplink signals and data depending on downlink signals of the reader. How to implement data retransmission of the AIoT terminal for an uplink transmission failure of the AIoT terminal becomes an urgent technical problem to be resolved.

This application provides a communication method. The communication method may be implemented by a first communication apparatus and a second communication apparatus. The first communication apparatus in embodiments of this application may be an AIoT terminal, or a component such as a chip, a processor, or a transceiver module in the AIoT terminal. The AIoT terminal may be replaced with an ultra-low-power-consuming internet of things terminal, or another device or apparatus that performs an AIoT service. The AIoT terminal may include a device A, a device B, or a device C described in this application. The second communication apparatus in embodiments of this application may be a communication apparatus configured to provide network access for the AIoT terminal, for example, a reader. The reader is, for example, in a form such as a terminal or a base station. For details, refer to descriptions in this application. Alternatively, the second communication apparatus may be a component such as a chip, a processor, or a transceiver module in the reader. The following describes the method with reference to FIG. 3.

In FIG. 3, an example in which a base station is used as a reader is used for description. It may be understood that, in actual implementation, a communication apparatus, for example, a terminal, other than the base station may also be used as a reader to perform actions of the base station shown in FIG. 3.

The method shown in FIG. 3 may include the following steps.

S101: The base station sends first information. Correspondingly, an AIoT terminal receives the first information.

The first information may indicate the AIoT terminal to send data.

S102: The AIoT terminal sends first data based on the first information.

Correspondingly, the base station may listen to the data of the AIoT terminal.

S103: The base station sends second information. Correspondingly, the AIoT terminal receives the second information.

The second information may indicate the AIoT terminal to send data.

Specifically, the second information may indicate to repeatedly send the data of the AIoT terminal, or may indicate that the data of the AIoT terminal fails to be received.

S104: The AIoT terminal sends the first data based on the second information. Correspondingly, the base station may listen to the data of the AIoT terminal.

The first data may be an EPC, identification information of the AIoT terminal, or other data. This is not specifically limited in this application.

Based on the procedure shown in FIG. 3, the AIoT terminal can retransmit the first data based on the second information.

In this application, "sending" information may be replaced with "outputting" information. For example, "outputting" may mean that one communication apparatus sends information to another communication apparatus. For another example, " outputting" may mean that a baseband unit in a communication apparatus outputs information to a radio frequency unit of the communication apparatus. For another example, "outputting" may mean that a radio frequency unit in one communication apparatus sends information to another communication apparatus through an air interface or another interface.

In this application, the second information may be the same as the first information. For example, the second information may be the repeatedly sent first information. In addition, the second information may alternatively be different from the first information. For example, in a possible implementation, the base station may receive fifth information from a core network element (for example, an AMF), and the first information may be determined based on the fifth information. The base station may further determine the second information based on the first information or the fifth information. Based on this implementation, the access network device may determine the first information based on the fifth information from the core network element, and when the second information needs to be sent, the access network device may also determine the second information based on the fifth information, or may send the second information based on the first information. For example, the first information is the same as the fifth information, and/or the second information is the same as the first information. Therefore, the access network device does not need to reobtain, from the core network element, information used to generate the second information, thereby reducing core network signaling overheads.

In a possible embodiment, the first information is a contention resolution message sent by the base station. The contention resolution message may also be referred to as an ACK or an access success indication. The contention resolution message may be included in a message sent by the base station to the AIoT terminal in a random access procedure. For example, the random access procedure may include four-step random access or two-step random access.

In an example of the four-step random access, in a four-step random access procedure, a first terminal may receive random access configuration information sent by a base station, determine a time-frequency resource of a physical random access channel (physical random access channel, PRACH) based on the configuration information, and do not perform step 1 to step 4 to implement random access. Step 1 may include: The first terminal sends a random access preamble (preamble), or referred to as a message 1 (message 1, Msg1) including a random access preamble, to the base station on a determined PRACH time-frequency resource. Step 2 may include: The base station sends a random access response (random access response, RAR), or referred to as a message 2 (message 2, Msg2) including a random access response, to the first terminal after receiving the random access preamble, where the random access response may include at least one parameter such as the random access preamble, a timing advance for uplink data, configuration information of an uplink resource used to send uplink data, and a cell radio network temporary identifier (cell radio network temporary identifier, C-RNTI). Step 3 may include: The first terminal receives the random access response, and if the random access preamble indicated by a sequence number of the random access preamble in the random access response is the same as the random access preamble sent by the first terminal to the base station in step 1, the first terminal determines that the random access response is intended for the first terminal, and the first terminal sends uplink data, or referred to as a message 3 (message 3, Msg3) including uplink data, to the base station as indicated by the random access response, for example, sends the uplink data on a PUSCH time-frequency resource. Step 4 may include: The base station receives the uplink data sent by the first terminal, and sends a contention resolution message (which may also be referred to as a collision resolution message), or referred to as a message 4 (message 4, Msg4) including a contention resolution message, to the first terminal. The base station includes a unique identifier into the contention resolution message to specify the first terminal that is successful in access, and another first terminal that fails in access re-initiates random access.

In an example of the two-step random access, in a two-step random access procedure, a first terminal may receive random access configuration information sent by a base station, determine a PRACH time-frequency resource and a PUSCH time-frequency resource based on the configuration information, and perform step 1 and step 2 to implement random access. Step 1 may include: The first terminal sends a message A (message A, MsgA) to the base station, where the MsgA includes a random access preamble and uplink data, the random access preamble is transmitted on a determined PRACH time-frequency resource, and the uplink data is transmitted on a determined PUSCH time-frequency resource. In an embodiment, step 1 in the two-step random access procedure is equivalent to step 1 and step 3 in the four-step random access procedure. Step 2 may include: The base station sends a message B (message B, MsgB) to the first terminal after receiving the MsgA sent by the first terminal, where the MsgB may be used to send a random access response and/or information for contention resolution. Step 2 in the two-step random access procedure may be equivalent to step 2 and step 4 in the four-step random access procedure.

Therefore, the contention resolution information or the ACK may be included in the Msg4 in the four-step random access procedure or the MsgB in the two-step random access procedure.

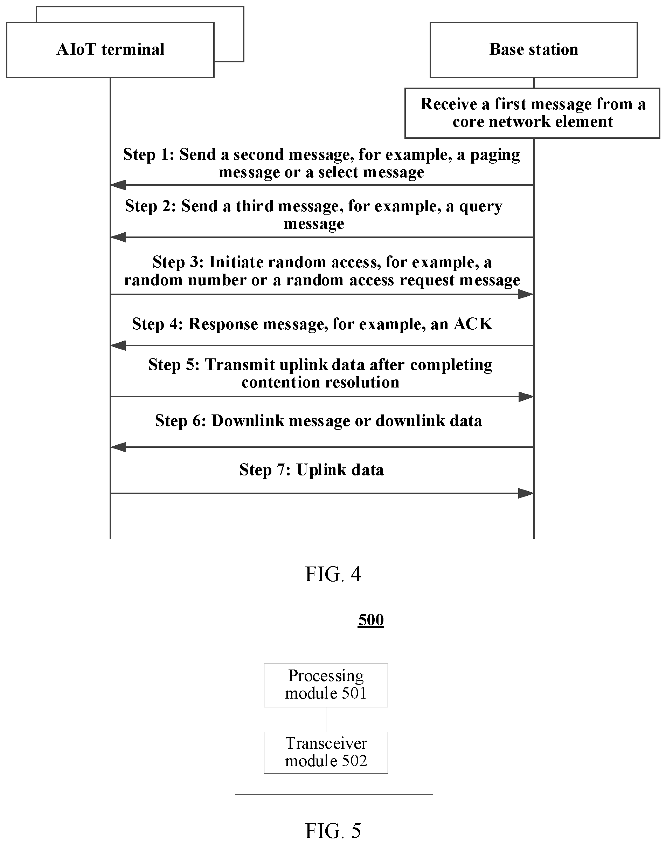

For example, for an access process of the AIoT terminal, refer to a procedure shown in FIG. 4.

Step 1: The base station sends a second message to the AIoT terminal after receiving a first message from the core network element (for example, the AMF). The first message is a message sent by the core network element to page the AIoT terminal, and the second message is a message sent by the base station to page the AIoT terminal. The second message may be a select (select) message or a paging (paging) message. The second message may be used to select at least one AIoT terminal or trigger access of the at least one AIoT terminal. Names of the first message and/or the second message are not limited.

Optionally, the first message may further include a size or a data volume of the first piece of uplink data of the AIoT terminal other than the access process. The data size may be a size of a non-access stratum (non-access stratum, NAS) data packet or an application layer data packet of the data. The data volume is a size of data that does not include an air interface packet header. The air interface packet header is, for example, a MAC layer packet header, an RLC layer packet header, a PDCP layer packet header, or a radio resource control (radio resource control, RRC) layer packet header.

For example, the base station enables, by using the select message or a paging message, an AIoT terminal that matches a signaling selection condition to set a state of an inventory flag. For example, the select message may be used to enable the AIoT terminal that matches the signaling selection condition to set a first inventory flag to a state B from a state A, and/or enable an AIoT terminal that does not match the selection condition to set a first inventory flag to the state A from the state B. A/B herein may also be replaced with 0/1. This step is optional. Alternatively, the AIoT terminal may not set some flags.

Step 2: The base station sends a third message to the AIoT terminal. The third message may be used to trigger access of at least one AIoT terminal. The third message may be a query message, an access round trigger message, or an access round indication message. The third message may also be understood as being used to trigger at least one AIoT terminal to select any one resource element from a plurality of resource elements in a current round to initiate access. One paging process may include a plurality of rounds of triggering an AIoT access process. That is, a plurality of third messages need to be sent.

For example, the query message is used to initialize an inventory round. The query message may include a state, for example, the state B, of the first inventory flag, to select an AIoT terminal whose state of the first inventory flag is B to perform access. The query message in this application may be replaced with an access round trigger message, an access round indication message, or other signaling or messages used to trigger user access.

The second message and the third message may be combined into one message, or may be separately sent as two messages, or only one of the two messages may be sent. When two messages, namely, the second message and the third message, are sent, the second message may be used to select at least one AIoT terminal, and the third message is used to trigger access of the selected at least one AIoT terminal. A maximum quantity of slots or time domain access resources for user access may be further allocated in the third message. For example, a value Q is indicated by using 4 bits, and Q is a positive integer. In this case, a range of slots that may be selected by the AIoT terminal is [0, 2^{Q}-1]. A slot is selected from the range, and random access is performed in the slot. The slot in this specification may also be replaced with another time domain unit, for example, a time domain unit such as a subframe or a frame, or may be an expression of a variable-length time. For example, a time between two access occasion trigger messages is one slot. The slot herein is merely an example. In other words, the slot may be understood as a time unit, and a length of the time unit is not limited.

For example, the third message is a query message. An index of a slot selected by the AIoT terminal is k, k∈[0, 2^{Q}-1], and a slot triggered by the query message is a slot 0. After sending the query message, the base station consecutively sends dedicated signaling for a plurality of AIoT terminals. The dedicated signaling is, for example, a QueryRep message, or may be a (next) access occasion trigger message. A slot of the first piece of dedicated signaling after the query message is a slot 1, a slot triggering the second fourth message is a slot 2, and so on. The dedicated signaling indicates the end of a previous slot, or may indicate the start of a next slot. The QueryRep message in this application may be replaced with a (next) access occasion trigger message, or other signaling or messages used to trigger an access occasion.

Each time the AIoT terminal receives the dedicated signaling, the AIoT terminal subtracts 1 from a value of k until the value of k becomes 0, and then sends a random number or an access message, where the random number or the access message may be used to initiate access. The random number is, for example, a 16-bit random number (random number 16, RN 16), an 8-bit random number, or a random access identifier. Optionally, a quantity of bits of the random number may be indicated by the paging message or the third message. It should be noted that, if a corresponding slot after the base station sends the query message is 0, a terminal whose initial value of a counter is 0 may initiate access immediately after receiving the query message.

In an example, the AIoT terminal performs slot counting based on received dedicated signaling. For example, the AIoT terminal selects a random number and saves the random number as a counter (counter). Each time the AIoT terminal receives one piece of dedicated signaling, counter=counter-1. When the counter is equal to 0, the AIoT terminal may send the random number, for example, RN16, or an access message. Alternatively, the AIoT terminal starts counting from the slot 0, and increases the counted value by 1 each time the AIoT terminal receives one piece of dedicated signaling. When the counted value is increased to be the same as the selected random number (counter), the AIoT terminal starts to send the random number or the access message. Alternatively, the base station may include a slot number into the sent dedicated signaling. For example, if the slot triggered by the query message is 0, a slot number carried in the first piece of dedicated signaling sent by the base station is 1, a slot number carried in the second piece of dedicated signaling is 2, and so on.

The first message optionally carries flag information, for example, a target flag, to indicate that only an AIoT terminal matching the target flag can perform random access.

Step 3: The AIoT terminal initiates random access in the selected slot, for example, sends a random number or a random access request message. Then, the AIoT terminal may wait for a response message of the base station to the AIoT terminal.

Step 4: If the base station successfully receives the random number or the random access request message of the AIoT terminal in step 3, the base station sends a response message to the AIoT terminal, where the response message may include a part of or all information in step 3. A name of the response message may be a contention resolution response message, an ACK, or a reception success message.

Step 5: After random access and successful contention resolution, the AIoT terminal may perform subsequent uplink data transmission, that is, send first data. Herein, the step of sending the first data corresponds to S102.

For example, the first data may include the EPC, or may include another identifier or uplink data of the AIoT terminal. The first data herein may be considered as being stored in a memory card or a memory module of the AIoT terminal, rather than a buffer. The memory may be an internal storage, which is a hardware device, and can be configured to persistently store data. The buffer is a storage area for pre-reading information, or a storage area for temporarily storing some non-persistent information.

After completing processing on one AIoT terminal, the base station may send dedicated signaling. After receiving the dedicated signaling, the AIoT terminal in communication with the base station may reverse an inventory flag, for example, from B to A. That is, the AIoT terminal in communication with the base station may consider, based on the dedicated signaling, that the AIoT terminal is in a random access success state or a data transmission success state. A condition under which the AIoT terminal reverses the flag or considers that the AIoT terminal is in the random access success state or the data transmission success state may be that the AIoT terminal successfully completes random access or successfully completes data transmission after random access, and/or the AIoT terminal receives no explicit transmission error, retransmission indication, or failure indication. In this case, when the dedicated signaling is received, it is considered that the slot ends, and a terminal state is the transmission success state or the random access success state. Alternatively, the dedicated signaling may be used to trigger a next access occasion, that is, after receiving the dedicated signaling, an AIoT terminal whose counter is not 0 performs an operation of subtracting 1 from the counter, and initiates access when counter=0. The base station may subsequently select a next AIoT terminal to initiate a random access procedure.

When the base station fails to receive the uplink data, the base station may trigger (or enable), in several manners, the AIoT terminal to retransmit corresponding data. In different manners, the base station may send different second information, to indicate the AIoT terminal to send the first data, thereby implementing retransmission. Herein, the step of sending the second information by the base station corresponds to S103, and the step of sending the first data by the AIoT terminal corresponds to S104.

The following separately describes several possible retransmission manners provided in this application.

Manner 1: The AIoT terminal is triggered by using a contention resolution message or an ACK to retransmit data. That is, the second information in S103 is the contention resolution message or the ACK.

The ACK is used as an example. The ACK may be associated with the first data. Therefore, when the base station fails to receive the first data, the base station may send the ACK again, to trigger the AIoT terminal to send the first data (signaling). The resent ACK has no contention resolution function, and only indicates to retransmit the first data. That is, the AIoT terminal needs to determine, based only on the ACK received for the first time, that random access is successful. In other words, the AIoT terminal does not need to determine, based on an ACK received for the second time or later, that random access is successful. That is, the AIoT terminal does not need to complete contention resolution based on the ACK received for the second time or later. The resent ACK may be used as the second information. A subsequent ACK may be used only to trigger transmission of the first data.

It may be understood that in Manner 1, the response message in step 4 shown in FIG. 4 may be used as an example of the first information in S101 in FIG. 3. In addition, the step of sending the first data by the AIoT terminal in step 5 shown in FIG. 4 corresponds to S102 in FIG. 3. In this case, the first data may be the EPC. When the EPC is not received, the base station may repeatedly send the ACK for one or more times, where the ACK is used as the second information. The AIoT terminal may send the EPC again after receiving the repeatedly sent ACK. In other words, when the second information in S103 is the contention resolution message or the ACK, the AIoT terminal may send the EPC.

Manner 2: The AIoT terminal is indicated by using an AIoT downlink command to transmit or retransmit data. That is, the second information in S103 is the AIoT downlink command.

The AIoT downlink command may indicate or trigger the AIoT terminal to perform a service operation. The AIoT downlink command may be application layer signaling. Optionally, the AIoT downlink command may be sent by the core network element to the base station, and then sent by the base station to the AIoT terminal. Alternatively, the base station may generate the AIoT downlink command based on a configuration from the core network element, and send the AIoT downlink command to the AIoT terminal.

For example, the service operation may include a read operation, and correspondingly, the AIoT downlink command may include a read command. For another example, the service operation may include a write operation, and correspondingly, the AIoT downlink command may include a write command.

The read command may also be referred to as a read instruction, which may indicate or trigger the AIoT terminal to perform a read operation. In the read operation, the AIoT terminal may read data according to the downlink command and send the data to a network, for example, send the data to an AIoT server. The AIoT terminal may further send a read response to the base station after completing the read operation, to indicate a result of the read operation.

If the AIoT downlink command includes a read command, the first data may be a read response. In this case, the first information may be a read command sent by the base station after step 4 and/or step 5 shown in FIG. 4. The first data may be a read response sent by the AIoT terminal after the AIoT terminal performs a read operation according to the read command. When the read response is not received, the base station may repeatedly send the read command for one or more times, where the read command is used as the second information. The AIoT terminal may send the read response again after receiving the repeatedly sent read command.

The write command may also be referred to as a write instruction, which may indicate or trigger the AIoT terminal to perform a write operation. In the write operation, the AIoT terminal may receive data sent by the network, and store the data into the memory. The AIoT terminal may further send a write response to the base station after completing the write operation, to indicate a result of the write operation.

If the AIoT downlink command includes a write instruction, the first data may be a write response. In this case, the first information may be a write command sent by the base station after step 4 and/or step 5 shown in FIG. 4. The first data may be a write response sent by the AIoT terminal after the AIoT terminal performs a write operation according to the write command. When the write response is not received, the base station may repeatedly send the write command for one or more times, where the write command is used as the second information. The AIoT terminal may send the write response again after receiving the repeatedly sent write command.

It may be understood that, in Manner 2, the AIoT terminal may perform a corresponding service operation according to the repeatedly sent AIoT downlink command. For example, after the base station sends the AIoT downlink command (for example, used as the first information), if a response (for example, used as the first data in S102) to the AIoT downlink command is not received, the base station considers that the AIoT terminal fails to receive the AIoT downlink command, and may send the AIoT downlink command (for example, used as the second information) again, and the AIoT terminal may perform a corresponding service operation according to the AIoT command. Regardless of whether the AIoT terminal performs the service operation according to the previously sent AIoT command, the AIoT terminal may perform the service operation according to the currently sent AIoT downlink command, and send an operation response (for example, used as the first data in S104) to the base station.

In addition, other than the read command and the write command, the AIoT downlink command in this application may further include a command used to trigger another operation, for example, a command used to trigger a secure operation. Similar to the read response or the write response, the another operation may also have a corresponding response, and the corresponding response may also be used as uplink data of the AIoT terminal. A retransmission manner of the corresponding response may be implemented with reference to that of the read command or the write command, and details are not described.

Manner 3: The AIoT terminal is indicated, by using new signaling or a new field, to retransmit data. That is, the second information in S103 is information, signaling, or a message other than the contention resolution message, the ACK, and the AIoT downlink command. For example, a new field whose value is a specific value may indicate that the AIoT terminal needs to retransmit data. For another example, the new field may be a field that can be carried in any downlink signaling, which indicates the AIoT terminal to retransmit latest uplink data or repeat an operation of a previous command, or may be a field included in a downlink packet header, which indicates the terminal to perform retransmission or repeat an operation of a previous command, or indicates that data previously sent by the AIoT terminal fails to be received. The new signaling or the new field includes, for example, a status report of one or more protocol layers, to indicate that a data packet, corresponding to the first data, of a corresponding protocol layer fails to be received. For example, the protocol layer includes an RLC layer.

For ease of description, the information, the signaling, or the message is referred to as new signaling below.

The new signaling may be sent together with an ACK, or may be sent separately, so that the terminal can be triggered to retransmit the first data, without depending on a message in a random access procedure. The message in the random access procedure includes the Msg1, the Msg2, the Msg3, the Msg4, the MsgA, and the MsgB. Details are as follows:

In an implementation, the base station sends the ACK for the first time and sends the new signaling in step 5, and the AIoT terminal sends the first data to the base station. If the base station fails to receive the uplink data, the base station may subsequently send only the new signaling, to trigger the AIoT terminal to send the first data again. In another manner, after the base station sends the ACK to the terminal for the first time in step 5, the AIoT terminal sends the first data to the base station. If the base station fails to receive the first data, the base station may send only the new signaling, to trigger the AIoT terminal to send the first data again.

It may be understood that the foregoing Manners 1 to 3 may be implemented separately or in combination. This is not limited in this application.

In a possible embodiment, the base station may indicate, by using information about the first data, at least one of a storage location, a data type, or a data index of the first data that needs to be sent by the AIoT terminal, to accurately indicate the first data. For example, the information about the first data may include at least one of location information, type information, or an index of the first data. The location information, the type information, and the index of the first data may respectively indicate the storage location, the data type, and the data index of the first data.

In an optional implementation, the second information may further include a random access response, or a message 2 carrying a random access response. That is, the AIoT terminal may be triggered, by using the random access response or the message 2, to retransmit the data or the identification information of the AIoT terminal.

Optionally, the random access response, the contention resolution message, or the message 2 may include a random number and/or a temporary identifier of the AIoT terminal. The random number may be used by the AIoT terminal to initiate access. The temporary identifier is an identifier used between the AIoT terminal and the access network device to identify the AIoT terminal. Based on this implementation, the random number and/or the temporary identifier may be indicated to the AIoT terminal by using the second information without an additional message (for example, dedicated signaling), thereby reducing signaling overheads.

Optionally, the information about the first data may be included in the second message shown in FIG. 4. The second message is, for example, a paging message or a select message, or the second message may be a MAC message or an RRC message. This is not specifically limited.

The paging message is used as an example. The paging message may include indication information indicating whether the AIoT terminal sends the EPC, another type of AIoT device identifier other than the EPC, or other information after receiving an ACK. For example, the indication information may indicate the EPC, the another type of AIoT device identifier other than the EPC, another identifier of the AIoT terminal, or another type of data. The indication information may be carried in a field in the paging message, or may be carried in a NAS packet in the paging message. The indication information may be used as an example of the type information of the first data. Based on the indication information, the AIoT may send first data of a corresponding type after receiving the ACK. It may be understood that, a data type in a subsequent retransmission process of the first data is consistent with the type of the first data sent for the first time. In addition, a storage location of the retransmitted first data is consistent with the storage location of the first data sent for the first time, and a data index of the retransmitted first data is consistent with the data index of the first data sent for the first time.

In addition, if the paging message does not include the information about the first data, after the base station sends the ACK, the terminal may determine at least one of the storage location, the data type, or the data index of the first data based on another configuration or rule, and return the first data. For example, in response to the ACK, the AIoT terminal sends, to the base station based on a default configuration, the EPC, the another type of AIoT device identifier other than the EPC, or uplink data having other location information, other type information, or another index. If the paging message includes a special indication (the indication may be a field or a NAS packet), the identifier sent by the terminal to the base station may not be the EPC, but may be another identifier, for example, second identification information, and other optional uplink data.

In this application, the another type of AIoT device identifier (or referred to as another identifier or other identification information for short) other than the EPC may be an identifier defined in 3GPP. For example, the identifier may include at least one piece of information such as a public land mobile network (public land mobile network, PLMN) identifier, third-party information, an identifier allocated by a core network, or an identifier stored in a storage area.

In a possible embodiment, the base station may send the second information in S103 upon determining that the base station fails to receive uplink data from the AIoT terminal after the first information in S101 is sent. The uplink data herein may be understood as the first data indicated by the base station by using the information about the first data, or may be understood as any uplink data from the AIoT terminal.

That the base station fails to receive the uplink data from the AIoT terminal may mean that the base station fails to receive the uplink data of the AIoT terminal within a specific time period after the first information is sent. For example, the base station may start a timer (or start time counting) after sending the first information. When the timer expires (or a counter reaches a specified time), if the base station has not successfully received the uplink data sent by the AIoT terminal, the base station considers that transmission fails, that is, determines that the uplink data from the AIoT terminal is not received. A value of a duration of the timer or the specified time of the counter may be specified in a protocol, or may be configured by the core network element, or may be implemented by the base station.

In an optional implementation, when the first information is some AIoT downlink commands, because the AIoT terminal needs a long processing time before sending corresponding uplink data after receiving the AIoT downlink commands, the base station may perform separate processing for this type of signaling, such as setting a long time period. For example, the base station may wait for a long time period for an AIoT downlink command such as a write command. For example, if the first information is a read command, the time period may be denoted as a first time period; or if the first information is a write command, the time period may be denoted as a second time period, where a length of the second time period is greater than a length of the first time period, that is, a time period corresponding to the write command may be greater than a time period corresponding to the read command, because the AIoT terminal takes a longer time to respond to the write command, so that a longer time may be reserved for the AIoT terminal to perform a write operation.

It may also be understood as that the reader (for example, the base station) uses a timer or a counter with a long duration for a type of signaling to determine whether uplink data fed back by the AIoT terminal is received. If the time period expires, the reader may consider that the AIoT terminal has not fed back uplink data or fails to feed back uplink data.

Optionally, when sending the first information to the base station, the core network element may indicate a type of the first information by sending type information or the like. For example, when the first information is an AIoT downlink command, the core network element may indicate, by using the type information, that the AIoT downlink command is of a type such as write signaling. That is, when sending the AIoT downlink command to the base station, the core network element may indicate the signaling type of the AIoT downlink command by using the indication information, where the signaling type may correspond to a processing time range or a maximum processing time of the terminal. Different types of downlink signaling are associated with different processing delays of the terminal. Therefore, the base station also waits for different time.

In addition, the core network element may indicate, to the base station by using indication information, a processing delay or a feedback delay of the AIoT terminal or a waiting delay of the base station for the first information. Correspondingly, when receiving the AIoT downlink command, the base station may determine the time period based on the processing delay or the feedback delay. In other words, the core network element may indicate, to the base station, a maximum time that needs to be waited for an uplink response message to an AIoT downlink command, or the like.

In the foregoing two manners, the base station can determine, within an appropriate time range, whether transmission is successful, to facilitate subsequent scheduling and management of the AIoT device.

In another implementation, to enable the base station to process different types of AIoT commands in a unified manner, it is considered that uplink signaling or data triggered by all downlink signaling or data is completed within a same time range. For example, for some signaling or processes requiring long processing delays, the AIoT terminal may reply, to the base station or the core network element, only with responses indicating that AIoT downlink commands are received, rather than response results of operations. If the base station or the core network element needs or expects to learn of a result of an operation corresponding to an AIoT downlink command completed by the AIoT terminal, the base station or the core network element may send or trigger the AIoT downlink command again, to trigger the AIoT terminal to feed back the result.

A write operation is used as an example. After the base station sends a write command for the first time, the AIoT terminal may reply only with that the write command is received, because an execution time of the write command is long. Subsequently, an application layer of the AIoT terminal or the core network element may trigger a read command to read a storage area into which the AIoT terminal is previously required to perform writing, and determine, based on content written by the AIoT terminal, whether the writing is successful. Alternatively, the application layer of the AIoT terminal or the core network element may trigger a query message, to query whether the previous write command is successfully executed. An operation result is, for example, whether the AIoT terminal is successful in the writing. In this way, time periods corresponding to different AIoT downlink commands are the same, and the base station can perform unified processing. That is, for downlink signaling requiring a long processing delay, a response message sent by the AIoT terminal to the base station or the core network may not be a result of executing the command, but an indication indicating whether the downlink command is successfully received.

It may be understood that, when the base station receives an uplink message sent by the AIoT terminal, but fails to parse out uplink data carried in the uplink message due to a reason such as a decoding or demodulation failure, the base station may also determine that uplink data from the AIoT terminal is not received.

In a possible embodiment, if there are data transmission and retransmission after step 5 shown in FIG. 4, it may be considered that each downlink message or each piece of downlink data sent by the base station triggers transmission of one piece of uplink data. As shown in FIG. 4, in step 6 and step 7, there may be a downlink message (or downlink data) and uplink data that appear as a pair. The downlink message may include an AIoT downlink command, and the uplink data may include a response of an operation performed according to the AIoT downlink command. It may be understood that, FIG. 4 shows only one pair of a downlink message (or downlink data) and uplink data as an example for description. A case in which there are a plurality of pairs of downlink messages (or downlink data) and uplink data may be implemented with reference thereto.

If the uplink data is triggered by using the downlink data, the second information or the first information may be carried in a data packet of the downlink data, for example, carried in a downlink data packet, for example, carried in a header of the downlink data packet.

The downlink message is used as an example. If no retransmission is performed, the downlink message may be used to trigger sending of the first data, that is, the downlink message may correspond to the first information. If retransmission is performed, the downlink message may be used to trigger retransmission of the first data. In this case, the downlink message may correspond to the second information, and the downlink message may be the same as the previous downlink message. For example, if the base station fails to receive uplink data after sending an AIoT downlink command, the base station may resend the previously sent AIoT downlink command, to trigger the AIoT terminal to perform transmission again.

In a possible embodiment, the AIoT terminal may buffer one or more RLC layer data packets corresponding to the first data, and determine, based on an RLC layer status report fed back by the base station, whether an RLC layer data packet needs to be retransmitted. The RLC layer status report may indicate whether the one or more RLC layer data packets are successfully received.

If the RLC layer status report indicates that there is an RLC layer data packet not successfully received, the AIoT terminal is triggered to perform retransmission. Because the buffer of the AIoT terminal is limited, the AIoT terminal may buffer only a sequence number (sequence number, SN) of a data packet, rather than a complete RLC layer data packet. In this case, the AIoT terminal may put, into a packet header, the data packet sequence number saved in the buffer, then re-read information from a memory area, regenerate an RLC layer data packet, and add the packet header read from the buffer. In addition, the RLC status report may also be applied to a downlink sending process. Correspondingly, the base station may buffer a corresponding packet (including a packet header) in an RLC layer data packet retransmission buffer.

In addition, when a packet header does not have a sequence number, if the AIoT terminal receives an RLC layer status report indicating a transmission failure of an RLC layer data packet, the AIoT terminal may repeatedly perform a retransmission operation or resend previously sent data or information. The AIoT terminal may record an action performed in the previous sending process.

It may be understood that the RLC layer status report may include at least one of the first indication information and the second indication information. The first indication information may indicate whether a first RLC layer data packet is successfully received, where the first RLC layer data packet may correspond to the first data. In other words, the first indication information may indicate whether one RLC data packet of the first data is successfully received. For example, the first indication information may include a sequence number of an RLC layer data packet that is successfully or not successfully received. The second indication information may indicate whether a plurality of RLC layer data packets corresponding to the first data are successfully received. For example, the first indication information may include sequence numbers and/or a sequence number range (range) of a plurality of RLC layer data packets that are successfully or not successfully received.

In addition, the RLC layer status report may further include a poll field. The poll field may be used to trigger a receive end to send an RLC layer status report. Therefore, the AIoT terminal may trigger the RLC layer status report by using the poll field. In other words, the base station does not need to send the RLC status report when the poll field is not received. Optionally, the poll field may be used to trigger the first indication information or the second indication information. For example, information or a field used to trigger the first indication information or the second indication information may be carried.

In addition, the RLC layer status report may further include a data or control transmission field. The field may be represented as data/control (data/control, D/C). The data or control transmission field may indicate whether an RLC layer data packet is used to carry control signaling or data.

Optionally, the RLC layer status report in this application may include a data or control transmission field and a sequence number. The RLC status report may be used as the first indication information.

Alternatively, the RLC layer status report may include a data or control transmission field, a poll field, and a sequence number. The poll field in the RLC layer status report may be used to trigger a device that receives the RLC layer status report to send an RLC layer status report when receiving data next time. The RLC status report may be used as the first indication information.

Alternatively, the RLC layer status report may include a data or control transmission field, a poll field, a sequence number, and a range. For example, the range may indicate a quantity of a plurality of consecutive RLC layer data packets that are successfully or not successfully received. The RLC status report may be used as the second indication information.

Alternatively, the RLC layer status report may include a data or control transmission field, and may further include a transmission success indication or a transmission failure indication. The transmission success indication and the transmission failure indication may share a same field, which are respectively represented by different values of the field. If the transmission failure indication is received, the AIoT terminal may trigger retransmission of latest sent data.

In this application, if the first data is transmitted in segments, the AIoT terminal divides the first data into a plurality of segments for transmission, and the AIoT terminal may sequentially transmit the segments based on a scheduling indication. If the AIoT terminal receives the second information during transmission, for example, before the AIoT terminal completes transmission of all the segments, the AIoT terminal may clear buffers of all to-be-sent segments or clear all buffers. The AIoT terminal may further send the first data again based on the second information. In this case, whether the first data needs to be segmented may be determined based on a latest scheduling indication or segment indication, or may be determined based on an allocated resource. Similarly, if the AIoT terminal receives another AIoT downlink command before transmission of all the segments of the first data is completed, the AIoT terminal may clear a buffer of a to-be-sent segment of the first data or clear all buffers, and perform new transmission according to the new AIoT downlink command.

In a possible embodiment, when a quantity of times of retransmitting the first data by the AIoT terminal reaches a maximum quantity, or the first data is still unsuccessfully transmitted when a maximum retransmission time expires, it is considered that the link fails, and the transmission is terminated. For example, if the AIoT terminal supports the flag, the flag is maintained unchanged. For example, the flag is maintained as B. That is, the unsuccessful data transmission of the AIoT terminal may be indicated by using the flag. In other words, the flag indicates that the AIoT terminal is currently in an unsuccessful transmission state. In addition, the unsuccessful data transmission of the AIoT terminal may not be indicated by using the flag. For example, when the AIoT terminal does not support the flag, or regardless of whether the AIoT terminal supports the flag, if transmission fails, it is considered that the terminal is currently in the unsuccessful transmission state.

In the foregoing embodiment, the maximum quantity of retransmission times and/or the maximum retransmission time may be indicated by the core network element, or may be specified in a protocol. This is not specifically limited.

When determining that the data transmission of the terminal fails, the base station may send third information, to indicate that the AIoT terminal is in the unsuccessful transmission state. Correspondingly, based on the third information, the AIoT terminal may determine not to perform flag switching, or determine to ignore flag switching, or determine that the transmission fails, or determine a state in which access needs to be continued. The third information may be, for example, a QueryRep message. When receiving again a message that triggers access, for example, a query message, the AIoT terminal may respond to the message again for access. An AIoT terminal that is successful in access or data transmission may not respond to the query message. Similarly, for an AIoT terminal whose flag is not reversed, the base station may trigger access of the AIoT terminal by using fourth information, and the AIoT terminal whose flag is not reversed may perform data transmission, for example, data retransmission, after access. The fourth information is, for example, a paging message or a query message.

In a possible embodiment, if the uplink data of the AIoT terminal is successfully transmitted, and there is new downlink data or downlink signaling, the base station may directly send the downlink signaling or the new downlink data without generating an RLC status report for the previous uplink transmission. In other words, the downlink signaling or the new downlink data may implicitly indicate that the previous transmission is successful.

Based on the same technical concept, an embodiment of this application provides a communication apparatus. The apparatus includes corresponding modules, units, or means (means) for performing method steps in the foregoing method embodiments. The modules, units, or means may be implemented by software, hardware, or hardware executing corresponding software.

For example, with reference to FIG. 5, the apparatus 500 may include a processing module 501 and a transceiver module 502.

Optionally, the transceiver module 502 may include a sending module and/or a receiving module. The sending module is configured to perform a sending operation in the foregoing method embodiments. The receiving module is configured to perform a receiving operation in the foregoing method embodiments.

It should be noted that the communication apparatus 500 may include the sending module but not include the receiving module. Alternatively, the communication apparatus 500 may include the receiving module but not include the sending module. This may be specifically determined depending on whether the solution performed by the communication apparatus 500 includes a sending action and a receiving action.

The processing module 501 is configured to process data. The transceiver module 502 can implement a corresponding communication function.

Optionally, the communication apparatus 500 may further include a storage module. The storage module may be configured to store instructions and/or data. The processing module 501 may read the instructions and/or the data in the storage module, to cause the communication apparatus 500 to implement the foregoing method embodiments.

For example, the communication apparatus 500 may be a first communication apparatus or a component that may be disposed in the first communication apparatus. The first communication apparatus is, for example, an AIoT terminal (for example, the AIoT terminal in FIG. 3 or FIG. 4). The processing module 501 is configured to perform processing related operations of the AIoT terminal in the foregoing method embodiments. The transceiver module 502 is configured to perform sending and/or receiving related operations of the AIoT terminal in the foregoing method embodiments.

For example, when configured to implement actions of the AIoT terminal shown in FIG. 3, the transceiver module 502 may be configured to send first data based on first information and/or second information.

For another example, when configured to implement steps performed by the AIoT terminal shown in FIG. 5, the transceiver module 502 may be configured to perform sending and/or receiving actions of the AIoT terminal. The processing module 501 may perform actions of the AIoT terminal other than the receiving and sending actions.

In addition, the communication apparatus 500 may be a second communication apparatus or a component that may be disposed in the second communication apparatus. The second communication apparatus is, for example, a reader (for example, the base station in FIG. 3 or FIG. 4). The processing module 501 is configured to perform processing related operations of the base station in the foregoing method embodiments. The transceiver module 502 is configured to perform sending and/or receiving related operations of the base station in the foregoing method embodiments.

For example, when configured to implement actions of the base station shown in FIG. 3, the transceiver module 502 may be configured to send first information and second information. The transceiver module 502 may further receive or listen to data from an AIoT terminal after sending the first information and/or the second information. The processing module 501 may be configured to determine that the data from the AIoT terminal is not received after the first information is sent. The processing module 501 may trigger sending of the second information when the data from the AIoT terminal is not received.

For another example, when configured to implement steps performed by the base station shown in FIG. 4, the transceiver module 502 may be configured to perform sending and/or receiving actions of the base station. The processing module 501 may perform actions of the base station other than the receiving and sending actions.

It should be understood that all related content of the steps in the foregoing method embodiments may be cited in function descriptions of corresponding functional modules. Details are not described herein again.

The processing module 501 in the foregoing embodiment may be implemented by at least one processor or a processor-related circuit. The transceiver module 502 may be implemented by a transceiver or a transceiver-related circuit. The transceiver module 502 may also be referred to as a communication module or a communication interface.

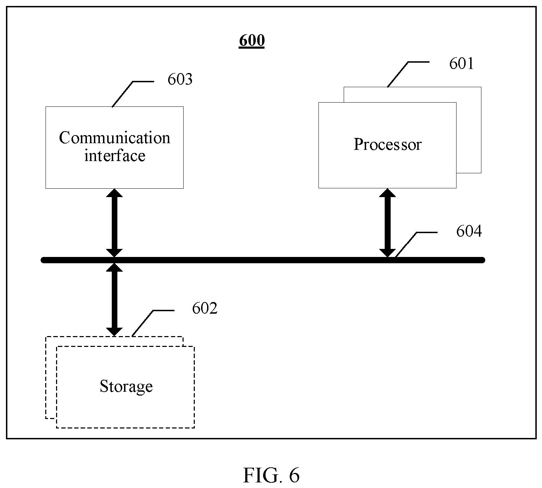

The following describes a diagram of another structure of a communication apparatus according to an embodiment of this application. As shown in FIG. 6, an embodiment of this application further provides a communication apparatus 600, including:
at least one processor 601 and a communication interface 603 that is communicatively connected to the at least one processor 601, where the at least one processor 601 executes instructions stored in at least one memory 602, to cause the apparatus to perform method steps in the foregoing method embodiments through the communication interface 603.

Optionally, the at least one memory 602 is located outside the apparatus 600.

Optionally, the apparatus 600 includes the at least one memory 602, the memory 602 is connected to the at least one processor 601, and the memory 602 stores instructions that can be executed by the at least one processor 601. FIG. 6 indicates, by using a dashed line, that the memory 602 is optional for the apparatus 600.

The processor 601 and the memory 602 may be coupled through an interface circuit, or may be integrated together. This is not limited herein.

A specific connection medium between the processor 601, the memory 602, and the communication interface 603 is not limited in embodiments of this application. In this embodiment of this application, the processor 601, the memory 602, and the communication interface 603 are connected through a bus 604 in FIG. 6, and the bus is represented by using a bold line in FIG. 6. It is merely an example for description, and a connection manner between other components is not limited thereto. The bus may be classified into an address bus, a data bus, a control bus, or the like. For ease of representation, only one bold line is used to represent the bus in FIG. 6, but this does not mean that there is only one bus or only one type of bus.

When the communication apparatus 600 is a first communication apparatus, the first communication apparatus may include a processor, a memory, and a transceiver. The memory may store computer program code, and the transceiver includes a transmitter and a receiver.

The processor is mainly configured to process communication protocols and communication data, for example, control the first communication apparatus, execute a software program, and process data of the software program. The memory is mainly configured to store the software program and the data. The transmitter is configured to send a signal to another communication apparatus or device, and the receiver is configured to receive a signal from another communication apparatus or device.

When the communication apparatus 600 is a chip in the first communication apparatus, the chip may include a processor, a memory, and a transceiver. The transceiver may be an input/output circuit or a communication interface. The processor may be a processing module, a microprocessor, or an integrated circuit integrated on the chip. A sending operation of the first communication apparatus in the foregoing method embodiments may be understood as outputting of the chip, and a receiving operation of the first communication apparatus in the foregoing method embodiments may be understood as inputting of the chip.

Similarly, when the communication apparatus 600 is a second communication apparatus, the second communication apparatus may include a processor, a memory, and a transceiver. The memory may store computer program code, and the transceiver includes a transmitter and a receiver.

The processor is mainly configured to process communication protocols and communication data, for example, control the second communication apparatus, execute a software program, and process data of the software program. The memory is mainly configured to store the software program and the data. The transmitter is configured to send a signal to another communication apparatus or device, and the receiver is configured to receive a signal from another communication apparatus or device.

When the communication apparatus 600 is a chip in the second communication apparatus, the chip may include a processor, a memory, and a transceiver. The transceiver may be an input/output circuit or a communication interface. The processor may be a processing module, a microprocessor, or an integrated circuit integrated on the chip. A sending operation of the second communication apparatus in the foregoing method embodiments may be understood as outputting of the chip, and a receiving operation of the second communication apparatus in the foregoing method embodiments may be understood as inputting of the chip.

It should be understood that the processor mentioned in embodiments of this application may be implemented by using hardware or software. When the processor is implemented by using hardware, the processor may be a logic circuit, an integrated circuit, or the like. When the processor is implemented by using software, the processor may be a general-purpose processor, which is implemented by reading software code stored in a memory.

For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a nonvolatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be noted that the memory described in this specification aims to include but is not limited to these memories and any storage of another appropriate type.

Based on the same technical concept, an embodiment of this application further provides a computer-readable storage medium, including a program or instructions. When the program or the instructions are run on a computer, the method in the foregoing method embodiments is performed.

An embodiment of this application further provides a chip or a chip system, including a circuit (for example, an analog circuit and/or a logic circuit; or it is understood as that the chip system includes one or more processors, and the one or more processors may include a circuit or the like), or it is understood as that the chip includes a processor. The circuit or the processor is coupled to a memory, and configured to execute a computer program or instructions stored in the memory, to implement the method shown in FIG. 3, FIG. 4, or embodiments of this application. The chip or the chip system may further include an input/output interface. For example, the chip implements functions of an AIoT terminal. The chip may receive information from another module (for example, a radio frequency module or an antenna) of the AIoT terminal through the input/output interface, where the information may be sent to the AIoT terminal by another communication apparatus such as a base station. Alternatively, the chip may send information to another module (for example, a radio frequency module or an antenna) in the AIoT terminal through the input/output interface, where the information may be sent by the AIoT terminal to another communication apparatus such as a base station.

Based on the same technical concept, an embodiment of this application further provides a computer program product, including instructions. When the instructions are run on a computer, the method in the foregoing method embodiments is performed.

Based on the same technical concept, an embodiment of this application further provides a communication system. The communication system may include a first communication apparatus and a second communication apparatus. The first communication apparatus may be configured to implement the method implemented by the first communication apparatus in the foregoing method embodiments, and the second communication apparatus may be configured to implement the method implemented by the second communication apparatus in the foregoing method embodiments. For example, the first communication apparatus is configured to perform actions performed by the AIoT terminal in the procedure shown in FIG. 3 or FIG. 4, and the second communication apparatus is configured to perform actions performed by the base station in the procedure shown in FIG. 3 or FIG. 4.

Based on the same technical concept, an embodiment of this application further provides a communication system. The communication system may include a first communication apparatus and a second communication apparatus. For example, the first communication apparatus is an AIoT terminal, and the second communication apparatus is a base station or another reader.

A person skilled in the art should understand that embodiments of this application may be provided as a method, a system, or a computer program product. Therefore, this application may be implemented in a form of a hardware only embodiment, a software only embodiment, or an embodiment with a combination of software and hardware. In addition, this application may be implemented in a form of a computer program product that is implemented on one or more computer-usable storage media (including but not limited to a magnetic disk storage, a CD-ROM, an optical storage, and the like) including computer-usable program code.

This application is described with reference to flowcharts and/or block diagrams of the method, the device (system), and the computer program product according to this application. It should be understood that computer program instructions may be used to implement each process and/or each block in the flowcharts and/or the block diagrams and a combination of processes and/or blocks in the flowcharts and/or the block diagrams. These computer program instructions may be provided to a processor of a general-purpose computer, a dedicated computer, an embedded processor, or other programmable data processing devices, to produce a machine, so that the instructions executed by the processor of the computer or other programmable data processing devices generate an apparatus for implementing functions specified in one or more processes of a flowchart and/or one or more blocks of a block diagram.

These computer program instructions may alternatively be stored in a computer-readable storage that can guide the computer or other programmable data processing devices to operate in a particular way, so that the instructions stored in the computer-readable storage produce an article of manufacture including an instruction apparatus, and the instruction apparatus implements the functions specified in the one or more processes of the flowchart and/or the one or more blocks of the block diagram.

These computer program instructions may alternatively be loaded to the computer or other programmable data processing devices, so that a series of operation steps are executed on the computer or other programmable data processing devices, to produce processing implemented by the computer, and therefore, the instructions executed on the computer or other programmable data processing devices provide steps of implementing the functions specified in the one or more processes of the flowchart and/or the one or more blocks of the block diagram.

In the descriptions of this application, the terms "first", "second", and the like are merely intended for distinguishing in the descriptions, but shall not be construed as indicating or implying relative importance or indicating or implying a sequence. It should be noted that an appearance sequence of "first", "second", and the like is not limited in this application. For example, "second" may appear before "first". This is not limited in this application.

In the descriptions of this application, "at least one (type)" means one (type) or more (types), and a plurality of (types) means two (types) or more (types). The expression "at least one of the following items" or a similar expression thereof refers to any combination of these items, including a single item or any combination of a plurality of items. For example, at least one of a, b, or c may represent a; b; c; a and b; a and c; b and c; or a, b, and c, where a, b, and c may be singular or plural. In the descriptions of this application, "/" indicates "or". For example, a/b indicates a or b.

## Claims

1. A communication method, comprising:
receiving first information, wherein the first information indicates to send data of an ambient internet of things AIoT terminal;
sending first data based on the first information, wherein the first data is data of the AIoT terminal;
receiving second information, wherein the second information indicates to send data of the AIoT terminal; and
sending the first data or identification information of the AIoT terminal based on the second information.

2. The method according to claim 1, wherein that the second information indicates to send the data of the AIoT terminal comprises:
the second information indicates to repeatedly send the data of the AIoT terminal; or
the second information indicates that the data of the AIoT terminal fails to be received.

3. The method according to claim 1 or 2, wherein
the second information is the same as the first information.

4. The method according to any one of claims 1 to 3, wherein the second information comprises any one of a contention resolution message, an acknowledgment ACK indication, an AIoT downlink command, or a random access response.

5. The method according to claim 4, wherein the random access response or the contention resolution message comprises a random number and/or a temporary identifier of the AIoT terminal, and the random number is used by the AIoT terminal to initiate access.

6. The method according to claim 5, wherein the temporary identifier is an identifier used between the AIoT terminal and an access network device to identify the AIoT terminal.

7. The method according to any one of claims 4 to 6, wherein the sending the identification information of the AIoT terminal based on the second information comprises:
sending the identification information of the AIoT terminal based on the second information when the second information comprises the contention resolution message or the ACK.

8. The method according to any one of claims 4 to 7, wherein both the first information and the second information comprise contention resolution messages, and the method further comprises: determining, based on the contention resolution message comprised in the first information, that random access of the AIoT terminal is successful; or
both the first information and the second information comprise ACKs, and the method further comprises: determining, based on the ACK comprised in the first information, that random access of the AIoT terminal is successful.

9. The method according to any one of claims 4 to 8, wherein the AIoT downlink command comprises a read command, and the first data comprises a read response.

10. The method according to any one of claims 4 to 9, wherein the AIoT downlink command comprises a write command, and the first data comprises a write response.

11. The method according to any one of claims 1 to 10, wherein the second information is carried in a downlink data packet.

12. The method according to any one of claims 1 to 11, wherein the sending the first data based on the first information comprises: sending at least one segment of the first data based on the first information; and
after the receiving the second information, the method further comprises: clearing a buffered segment of the first data.

13. The method according to any one of claims 1 to 12, wherein the second information comprises a radio link control RLC layer status report, and the RLC layer status report indicates that the first data fails to be received.

14. The method according to claim 13, wherein the RLC layer status report comprises one or more of the following:
first indication information indicating whether a first RLC layer data packet is successfully received, wherein the first RLC layer data packet corresponds to the first data; and
second indication information indicating whether a plurality of RLC layer data packets are successfully received, wherein the plurality of RLC layer data packets correspond to the first data.

15. The method according to claim 13 or 14, wherein the method further comprises:
sending a poll field used to trigger the RLC layer status report.

16. The method according to any one of claims 1 to 15, wherein the method further comprises:
receiving information about the first data, wherein the information about the first data comprises at least one of location information of the first data, type information of the first data, or an index of the first data.

17. The method according to claim 16, wherein the information about the first data is carried in a paging message for the AIoT terminal.

18. The method according to any one of claims 1 to 17, wherein the method further comprises:
receiving third information, wherein the third information indicates that the AIoT terminal is in an unsuccessful transmission state.

19. The method according to claim 18, wherein the third information is a query repeat QueryRep message.

20. The method according to claim 18 or 19, wherein the method further comprises:
receiving fourth information, wherein the fourth information is used to trigger the terminal in the unsuccessful transmission state to perform random access; and
performing random access based on the fourth information.

21. A communication method, comprising:
sending first information, wherein the first information is used to request first data, and the first data is data of an AIoT terminal;
sending second information upon determining that the first data is not received, wherein the second information indicates to send data of the AIoT terminal; and
receiving the first data of the AIoT terminal or identification information of the AIoT terminal.

22. The method according to claim 21, wherein the determining that the first data is not received comprises:
determining that the data of the AIoT terminal is not received within a time period after the first information is sent.

23. The method according to claim 22, wherein if the first information comprises a read command, the time period is a first time period; or if the first information comprises a write command, the time period is a second time period, wherein
a length of the second time period is greater than a length of the first time period.

24. The method according to claim 23, wherein the method further comprises:
receiving type information of the first information, wherein the type information indicates that the first information is a write command.

25. The method according to any one of claims 22 to 24, wherein the method further comprises:
receiving indication information of the time period.

26. The method according to any one of claims 22 to 25, wherein the method further comprises:
receiving fifth information from the core network element, wherein the first information is determined based on the fifth information; and
determining the second information based on the first information or the fifth information.

27. The method according to any one of claims 21 to 26, wherein that the second information indicates to send the data of the AIoT terminal comprises:
the second information indicates to repeatedly send the data of the AIoT terminal; or
the second information indicates that the data of the AIoT terminal fails to be received.

28. The method according to any one of claims 21 to 27, wherein
the second information is the same as the first information.

29. The method according to any one of claims 21 to 28, wherein the second information comprises any one of a contention resolution message, an acknowledgment ACK indication, an AIoT downlink command, or a random access response.

30. The method according to claim 29, wherein the random access response or the contention resolution message comprises a random number and/or a temporary identifier of the AIoT terminal, and the random number is used by the AIoT terminal to initiate access.

31. The method according to claim 30, wherein the temporary identifier is an identifier used between the AIoT terminal and an access network device to identify the AIoT terminal.

32. The method according to any one of claims 29 to 31, wherein the receiving the identification information of the AIoT terminal
the second information comprises the contention resolution message or the ACK, and the first data comprises the identification information of the AIoT terminal.

33. The method according to any one of claims 21 to 32, wherein the AIoT downlink command comprises a read command, and the first data comprises a read response.

34. The method according to any one of claims 29 to 33, wherein the AIoT downlink command comprises a write command, and the first data comprises a write response.

35. The method according to any one of claims 21 to 34, wherein the second information is carried in a downlink data packet.

36. The method according to any one of claims 21 to 35, wherein the second information comprises an RLC layer status report, and the RLC layer status report indicates that the first data fails to be received.

37. The method according to claim 36, wherein the RLC layer status report comprises one or more of the following:
first indication information indicating whether a first RLC layer data packet is successfully received, wherein the first RLC layer data packet corresponds to the first data; and
second indication information indicating whether a plurality of RLC layer data packets are successfully received, wherein the plurality of RLC layer data packets correspond to the first data.

38. The method according to claim 36 or 37, wherein the method further comprises:
receiving a poll field used to trigger the RLC layer status report.

39. The method according to any one of claims 21 to 38, wherein the method further comprises:
sending information about the first data, wherein the information about the first data comprises at least one of location information of the first data, type information of the first data, or an index of the first data.

40. The method according to claim 39, wherein the information about the first data is carried in a paging message for the AIoT terminal.

41. The method according to any one of claims 21 to 40, wherein the method further comprises:
sending third information, wherein the third information indicates that the AIoT terminal is in an unsuccessful transmission state.

42. The method according to claim 41, wherein the third information is QueryRep signaling.

43. The method according to claim 41 or 42, wherein the method further comprises:
sending fourth information, wherein the fourth information is used to trigger the terminal in the unsuccessful transmission state to perform random access; and
performing random access based on the fourth information.

44. A communication apparatus, comprising a unit or module configured to perform the method according to any one of claims 1 to 20, or a unit or module configured to perform the method according to any one of claims 21 to 43.

45. A communication apparatus, comprising a processor, wherein the processor is configured to execute a computer program or instructions, to implement the method according to any one of claims 1 to 20, or the method according to any one of claims 21 to 43.

46. A computer-readable storage medium, wherein the storage medium stores a computer program or instructions, and when the computer program or the instructions are executed by a communication apparatus, the method according to any one of claims 1 to 20 is implemented, or the method according to any one of claims 21 to 43 is implemented.

47. A computer program product, wherein when the computer program product is executed by a computer, the computer is caused to perform the method according to any one of claims 1 to 20, or the method according to any one of claims 21 to 43.
